# EUROPÄISCHE PATENTSCHRIFT

(11) **EP 3 628 440 B1**
(45) Veröffentlichungstag und Bekanntmachung des Hinweises auf die Patenterteilung: **16.03.2022**
(21) Anmeldenummer: 18197206.8
(22) Anmeldetag: 27.09.2018
(51) Int. Cl.: B23Q 3/18, B62D 65/02

(54) **POSITIONIERVORRICHTUNG**
POSITIONING DEVICE
DISPOSITIF DE POSITIONNEMENT

(43) Veröffentlichungstag der Anmeldung: 01.04.2020
(73) Patentinhaber: MAGNA STEYR Fahrzeugtechnik AG & Co KG, 8041 Graz (AT)
(72) Erfinder: SPANNER, Gerhard, 8262 Ilz (AT)
(74) Vertreter: Zangger, Bernd

(56) Entgegenhaltungen:
- EP-A1- 0 911 112
- WO-A2-2004/004977
- DE-A1-102016 122 090
- DE-U1-202016 101 411

## Beschreibung

### Gebiet der Erfindung

Die vorliegende Erfindung betrifft eine Positioniervorrichtung, zum Positionieren eines Karosseriebauteils mit mindestens einer Aufnahmebohrung im Fahrzeugbau.

### Stand der Technik

Vielfach müssen im Automobilbau, insbesondere im Zuge des Karosseriebaus, dünnwandige Bauteile, meist Blechteile, exakt positioniert werden, insbesondere um an andere Karosseriebauteile oder Karosseriegruppen angeschweißt oder auf sonstige Weise gefügt zu werden. Die dünnwandigen Bauteile weisen dazu zumindest eine, üblicherweise aber zumindest zwei Aufnahmebohrungen auf. Aufnahmebolzen an einer Positioniervorrichtung werden dazu verwendet, durch diese Bohrungen der Karosserieteile hindurchzugreifen und die miteinander zu verbindenden Bauteile zu positionieren. Die Aufnahmebolzen weisen oft ein konisches Ende auf um einfacher in die Bohrungen zu gelangen und die Bauteile beim Durchtritt der Aufnahmebolzen zu zentrieren, daher werden solche Aufnahmebolzen auch "Zentrierbolzen" genannt. Nach einer solchen Positionierung der Bauteile folgen im Zuge der weiteren Montage oft Schritte des Fixierens oder Spannens der Bauteile und Schritte zum Fügen mit anderen Karosseriebauteilen.

Die DE 39 19 077 C1 offenbart beispielsweise eine Vorrichtung zum positionsdefinierten Aufspannen eines Werkstücks auf einem Bearbeitungstisch mit einer Werkstückaufnahme, auf welcher das Werkstück lösbar befestigt wird und welche mit Zentrieröffnungen versehen ist, die mit korrespondierend auf dem Bearbeitungstisch angeordneten, über diesen vorstehenden Zentrierzapfen zusammenwirken, wobei eine erste Gruppe von Zentrieröffnungen und Zentrierzapfen vorgesehen ist, die die Lage der Werkstückaufnahme in X- und Y-Richtung festlegen.

Die EP 0 911 112 A1, die als Basis für die zweiteilige Form des Anspruchs 1 dient, offenbart eine druckmittelbetätigbare kombinierte Zentrier- und Spannvorrichtung, insbesondere zur Verwendung im Karosseriebau der Kfz-Industrie, mit einem bolzenförmigen Zentrierteil und einem Spannteil, wobei das Zentrierteil und das Spannteil abwechselnd in beiden Richtungen - spannend und zentrierend oder lösend - nacheinander durch Druckmitteldruck antreibbar und das Spannteil in und an dem bolzenförmigen Zentrierteil gelagert ist.

Die DE 10 2016 122090 A1 offenbart ein Spannsystem zum Spannen eines Werkstücks auf wenigstens einer Nullpunktplatte, wobei wenigstens eine Ausgleichsverbindungseinheit vorgesehen ist, welche einen Grundkörper aufweist, von dessen Oberseite ein Verbindungselement hervorsteht, welches in eine Aufnahme an der Unterseite des Werkstücks einführbar und dort fixierbar ist, und von dessen Unterseite ein Nullpunktbolzen hervorsteht, welcher in eine Nullpunktaufnahme der Nullpunktplatte einführbar ist, wobei die Ausgleichsverbindungseinheit Verstellmittel aufweist, wobei in einer Lösestellung der Verstellmittel mit diesen die Relativposition des Verbindungselements zum Nullpunktbolzen einstellbar ist, und wobei an der Nullpunktplatte Spannmittel vorgesehen sind, mittels derer der Nullpunktbolzen in der Nullpunktaufnahme fixierbar ist, wobei durch diese Fixierung die Verstellmittel in eine Fixierstellung überführt sind, in der die Relativposition des Verbindungselements zum Nullpunktbolzen fixiert ist.

Aus der DE 20 2016 101411 U1 ist ein Einzugsspannelement zum Verriegeln in oder an einer Spannaufnahme, insbesondere einer Spannaufnahme eines Nullpunktspannsystems, bekannt, wobei das Einzugsspannelement einen Angriffsabschnitt derart aufweist, dass beim Verriegeln des Einzugsspannelements spannaufnahmeseitiges Verriegelungselement gegen den Angriffsabschnitt so wirkt, dass das Einzugsspannelement in oder gegen die Spannaufnahme gezogen wird, wobei das Einzugsspannelement einen um eine Mittellängsachse verlaufenden Grundabschnitt und ein gegenüber dem Grundabschnitt in wenigstens einer radialen Richtung beweglich angeordnetes Halteelement aufweist, wobei der Angriffsabschnitt am Halteelement so vorgesehen ist, dass beim Verlagern des Verriegelungselements in die Verriegelungslage ein Ausgleich des Halteelements gegenüber dem Grundabschnitt in wenigstens einer radialen Richtung ermöglicht ist.

Die Aufnahmebohrungen in den Karosseriebauteilen werden teilweise später, jedenfalls nach der Positionierung der Bauteile, mit Dichtstopfen versehen um diese Öffnungen zu schließen.

Problematisch ist, dass beim Durchtritt von Aufnahmebolzen durch die Bohrungen der dünnwandigen Bauteile, im Zuge der Positionierung, die Bohrungen bzw. die Karosseriebauteile im Bereich der Bohrungen manchmal beschädigt werden. An derartigen beschädigten Aufnahmebohrungen von Karosseriebauteilen kann es später, auch nach dem Anbringen von Dichtstopfen, zu einem unerwünschten Wassereintritt in die Karosserie kommen.

### Zusammenfassung der Erfindung

Es ist eine Aufgabe der Erfindung, eine verbesserte Positioniervorrichtung, zum Positionieren eines Karosseriebauteils mit mindestens einer Aufnahmebohrung im Fahrzeugbau, anzugeben, die insbesondere Beschädigungen der Karosseriebauteile im Bereich der Aufnahmebohrungen während der Positionierung vermeidet.

Die Lösung der Aufgabe erfolgt durch eine Positioniervorrichtung, zum Positionieren eines Karosseriebauteils mit mindestens einer Aufnahmebohrung im Fahrzeugbau, umfassend einen Aufnahmebolzen mit einem konischen Ende der dazu ausgebildet ist, axial durch die Aufnahmebohrung des Karosseriebauteils geführt zu werden um das Karosseriebauteil zu zentrieren und zu positionieren, wobei der Aufnahmebolzen radial schwimmend gelagert ist, wobei der Aufnahmebolzen an seinem dem konischen Ende gegenüberliegenden Ende eine axiale Ausnehmung in Form eines Innenkegels aufweist, wobei die Positioniervorrichtung einen Sperrbolzen umfasst, wobei der Sperrbolzen ein konisches Ende aufweist, wobei der Sperrbolzen axial gegenüber dem Aufnahmebolzen verschieblich ist, wobei die Durchmesser des Innenkegels des Aufnahmebolzens und des konischen Endes des Sperrbolzens zueinander passen, so dass das konische Ende durch Passung in den Innenkegel aufgenommen werden kann.

Erfindungsgemäß ist ein Aufnahmebolzen mit konischem Ende zum Zentrieren und Positionieren eines Bauteils radial schwimmend gelagert. Es hat sich gezeigt, dass durch eine starre Ausbildung eines Aufnahmebolzens die Aufnahmebohrungen der positionierten Bauteile stärker beschädigt werden. Insbesondere bei mehrmaliger Aufnahme der Bauteile im Zuge der Fahrzeugmontage werden die Aufnahmebohrungen bei Verwendung starrer Aufnahmebolzen immer stärker aufgeweitet und/oder beschädigt. Die Folge sind höhere Maßungenauigkeiten oder Undichtheit der Karosseriebauteile. Durch die radial schwimmende Lagerung der Aufnahmebolzen können die Karosseriebauteile genau positioniert werden, erforderlichenfalls auch mehrmals positioniert, und werden dabei weniger oder gar nicht beschädigt.

Erfindungsgemäß weist der Aufnahmebolzen an seinem dem konischen Ende gegenüberliegenden Ende eine Ausnehmung in Form eines Innenkegels auf. Der Innenkegel verläuft axial an diesem Ende des Aufnahmebolzens in das Innere des Aufnahmebolzens und bevorzugt koaxial mit dem Aufnahmebolzen, um eine mit dem Aufnahmebolzen gemeinsame Mittelachse.

Die Positioniervorrichtung umfasst erfindungsgemäß einen Sperrbolzen, wobei der Sperrbolzen ein konisches Ende aufweist, wobei der Sperrbolzen axial gegenüber dem Aufnahmebolzen verschieblich ist. Der Sperrbolzen kann daher zum Aufnahmebolzen hin verschoben werden, insbesondere so dass der Sperrbolzen in Kontakt mit dem Aufnahmebolzen tritt.

Die Durchmesser des Innenkegels des Aufnahmebolzens und des konischen Endes des Sperrbolzens passen erfindungsgemäß zueinander, so dass das konische Ende durch Passung in den Innenkegel aufgenommen werden kann. Diese Geometrie der beiden Kegel bestimmt im Wesentlichen auch das mögliche "Spiel" bzw. die schwimmende Lagerung zwischen dem Aufnahmebolzen und dem angesetzten Bund einerseits und dem Innendurchmesser des Halteringes andererseits und kann daher zur Bereitstellung eines gewünschten Spiels verwendet werden. Ist beispielsweise der Durchmesser des Innenkegels des Aufnahmebolzens kleiner, so ist auch das "Spiel" kleiner bzw. die radial schwimmende Bewegung des Aufnahmebolzens kleiner.

Das Wort "Bohrung" legt erfindungsgemäß nicht die Herstellungsweise der entsprechenden Öffnung fest und ist daher im Sinn einer durch das Bauteil führenden Öffnung mit einem üblicherweise runden Querschnitt zu verstehen.

Bevorzugt weist der Aufnahmebolzen einen zylindrischen Bolzenabschnitt auf und ist in einem Haltering radial schwimmend gelagert. Der Haltering weist einen etwas größeren Innendurchmesser auf als der Außendurchmesser des zylindrischen Bolzenabschnitts. Es gibt also ein "Spiel" zwischen dem Haltering und dem Aufnahmebolzen bzw. dem zylindrischen Bolzenabschnitt des Aufnahmebolzens.

Besonders bevorzugt ist der Aufnahmebolzen zweistufig ausgebildet und weist zusätzlich zum zylindrischen Bolzenabschnitt einen zylindrischen Bund auf, wobei der zylindrische Bund einen größeren Durchmesser aufweist als der zylindrische Bolzenabschnitt. Der Haltering ist ebenfalls zweistufig ausgebildet und der Aufnahmebolzen zweistufig radial schwimmend in diesem Haltering radial gelagert. Eine erste Stufe des Halterings weist dazu einen größeren Innendurchmesser auf als der Außendurchmesser des zylindrischen Bolzenabschnitts und eine zweite Stufe des Halterings weist einen größeren Innendurchmesser auf als der Außendurchmesser des zylindrischen Bundes. Es gibt also ein "Spiel" zwischen erster Stufe des Halteringes und Aufnahmebolzen sowie auch zwischen zweiter Stufe des Halteringes und Außendurchmesser des zylindrischen Bundes.

Vorzugsweise umfasst die Positioniervorrichtung einen Grundkörper, wobei der Haltering am Grundkörper befestigt ist oder einstückig mit dem Grundkörper ausgebildet ist, wobei der Aufnahmebolzen axial durch den Grundkörper und/oder durch den Haltering festgelegt ist. Der Aufnahmebolzen kann im Wesentlichen, zumindest axial, bevorzugt aber auch radial abgesehen von den Freiheitsgraden aufgrund der schwimmenden Lagerung, zusammen mit dem Grundkörper bewegt und positioniert werden.

Der Sperrbolzen kann durch eine Bohrung des Grundkörpers geführt sein und der Sperrbolzen kann axial gegenüber dem Grundkörper verschieblich sein, somit in der Bohrung des Grundkörpers verschoben werden.

Bevorzugt ist der Sperrbolzen mittels zweier Lagerbuchsen im Grundkörper radial gelagert, insbesondere in der Bohrung des Grundkörpers.

Vorzugsweise kann der Sperrbolzen mittels eines Pneumatikzylinders axial gegenüber dem Aufnahmebolzen und gegenüber dem Grundkörper verschoben werden. Der Pneumatikzylinder kann am Grundkörper befestigt sein.

### Kurzbeschreibung der Zeichnungen

Die Erfindung wird im Folgenden beispielhaft unter Bezugnahme auf die Zeichnungen beschrieben.
- Fig. 1: ist eine Explosionsdarstellung, welche eine erfindungsgemäße Positioniervorrichtung zeigt.
- Fig. 2: ist eine seitliche Schnittansicht einer erfindungsgemäßen Positioniervorrichtung gemäß Fig. 1.
- Fig. 3: ist eine dreidimensionale Darstellung einer erfindungsgemäßen Positioniervorrichtung gemäß Fig. 2 mit zu positionierendem Karosseriebauteil.
- Fig. 4: ist eine dreidimensionale und teilweise geschnittene Darstellung einer erfindungsgemäßen Positioniervorrichtung gemäß Fig. 3 in einem ersten Zustand.
- Fig. 5: ist eine dreidimensionale und teilweise geschnittene Darstellung einer erfindungsgemäßen Positioniervorrichtung gemäß Fig. 3 in einem zweiten Zustand.
- Fig. 6: ist eine dreidimensionale Darstellung einer erfindungsgemäßen Positioniervorrichtung gemäß Fig. 2 aus einer weiteren Perspektive.

### Detaillierte Beschreibung der Erfindung

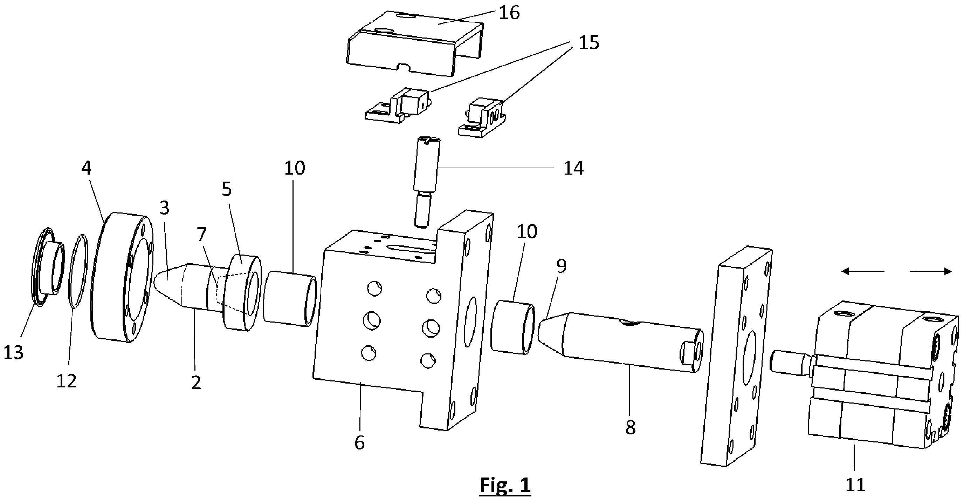

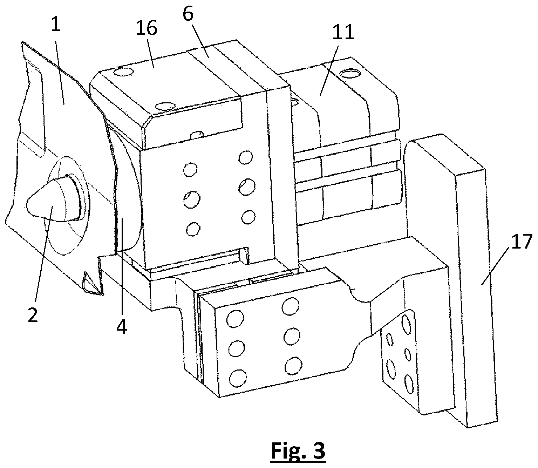

In den Fig. 1-6 ist eine erfindungsgemäße Positioniervorrichtung zum Positionieren eines Karosseriebauteils 1 mit einer Aufnahmebohrung (siehe Figs. 3 - 5) dargestellt, welche einen Aufnahmebolzen 2 mit einem konischen Ende 3 umfasst, der dazu ausgebildet ist, axial durch die Aufnahmebohrung des Karosseriebauteils 1 geführt zu werden um das Karosseriebauteil 1 zu zentrieren und zu positionieren.

Der Aufnahmebolzen 2 ist radial schwimmend gelagert in einem Haltering 4.

Der Aufnahmebolzen 2 weist einen zylindrischen Bolzenabschnitt auf, der einen geringeren Außendurchmesser aufweist, als der Innendurchmesser des Halterings 4.

Genauer ist der Aufnahmebolzen 2 zumindest zweistufig ausgebildet und weist zusätzlich zum zylindrischen Bolzenabschnitt einen zylindrischen Bund 5 auf, wobei der zylindrische Bund 5 einen größeren Durchmesser aufweist, als der zylindrische Bolzenabschnitt.

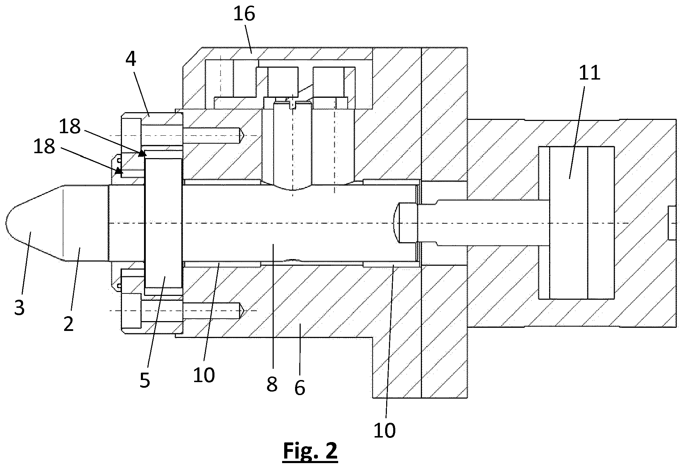

Der Haltering 4 ist ebenfalls zweistufig ausgebildet und der Aufnahmebolzen 2 ist zweistufig radial schwimmend im Haltering 4 gelagert. Eine erste Stufe des Halterings 4 weist einen größeren Innendurchmesser auf, als der Außendurchmesser des zylindrischen Bolzenabschnitts und eine zweite Stufe des Halterings 4 weist einen größeren Innendurchmesser auf als der Außendurchmesser des zylindrischen Bundes 5. Es gibt also, wie in Fig. 2 gut ersichtlich, ein Spiel 18 zwischen erster Stufe des Halteringes 4 und Aufnahmebolzen 2 sowie auch zwischen zweiter Stufe des Halteringes 4 und Außendurchmesser des zylindrischen Bundes 5.

Die Positioniervorrichtung umfasst einen Grundkörper 6, wobei der Haltering 4 am Grundkörper 6 befestigt ist. Der Aufnahmebolzen 2 ist axial durch den Grundkörper 6 und durch den Haltering 4 gelagert, wie in Fig. 2 gut ersichtlich.

Der Aufnahmebolzen 2 weist an seinem dem konischen Ende 3 gegenüberliegenden Ende eine axiale Ausnehmung in Form eines Innenkegels 7 auf.

Die Positioniervorrichtung umfasst einen Sperrbolzen 8, wobei der Sperrbolzen 8 ein konisches Ende 9 aufweist. Der Sperrbolzen 8 ist axial gegenüber dem Aufnahmebolzen 2 verschieblich.

Die Durchmesser des Innenkegels 7 des Aufnahmebolzens 2 und des konischen Endes 9 des Sperrbolzens 8 passen zueinander, so dass das konische Ende 9 anliegend in den Innenkegel 7 aufgenommen werden kann.

Der Sperrbolzen 8 ist durch eine Bohrung des Grundkörpers 6 geführt und axial gegenüber dem Grundkörper 6 verschieblich.

Der Sperrbolzen 8 ist mittels zweier Lagerbuchsen 10 im Grundkörper 6 radial gelagert. Die Lagerbuchsen 10 sind in der Bohrung des Grundkörpers 6 angeordnet.

Mittels eines Pneumatikzylinders 11 kann der Sperrbolzen 8 axial gegenüber dem Aufnahmebolzen 2 und gegenüber dem Grundkörper 6 verschoben werden. Der Pneumatikzylinder 11 ist seitlich am Grundkörper 6 oder einer mit dem Grundkörper 6 verbundenen Anschlussplatte befestigt.

Zusammengefasst ist somit an dem Grundkörper 6 stirnseitig der Aufnahmebolzen 2, mit dem für das aufzunehmende Bauteil 1 bzw. dessen Aufnahmebohrung entsprechendem Durchmesser, schwimmend aufgesetzt. Der Aufnahmebolzen 2 hat am hinteren Ende einen angesetzten Bund 5 und zusätzlich an diesem Ende einen Innenkegel 7. Der Aufnahmebolzen 2 wird mit einem vorne angeschraubten Haltering 4 radial schwimmend befestigt. Die abgestufte Bohrung des vorderen Halteringes 4 ist im Durchmesser zum Aufnahmebolzen 2 sowie zum angesetzten Bund 5 des Aufnahmebolzens 2 je nach Bedarf im Durchmesser größer. Die Breite des angesetzten Bundes 5 vom Aufnahmebolzen 2 ist zur inneren Breite des Halteringes 4 minimal geringer. Somit kann sich der Aufnahmebolzen 2 radial in alle Richtungen frei bewegen.

Weiters ist im Grundkörper 6 ein über Lagerbuchsen 10 geführter Sperrstift 8 mit vorne angesetztem Kegel 9 eingebaut. Der Kegelwinkel entspricht dem Innenkegel 7 des Aufnahmebolzens 2. Dieser Sperrstift 8 wird mittels hinten aufgesetztem Pneumatikzylinder 11 nach vorne bzw. nach hinten geschoben (in Richtung der in Fig. 1 eingezeichneten Pfeile).

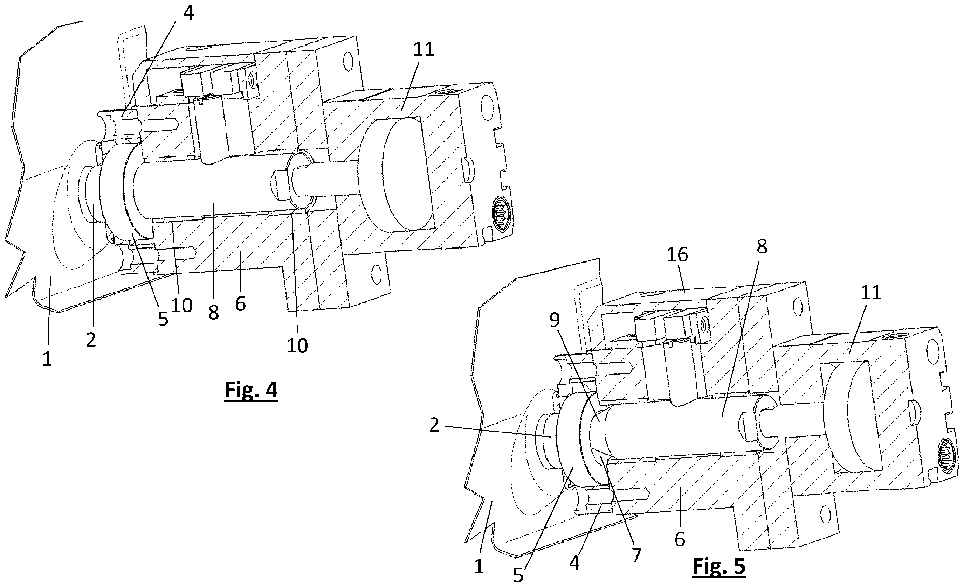

Ist der eingebaute Sperrstift 8 mit dem vorne angesetztem Kegel 9 nach hinten gezogen, wie in Fig. 5 dargestellt, kann sich der vordere Aufnahmebolzen 2 radial frei bewegen.

Wird der eingebaute Sperrstift 8 mit der Kraft des hinten angebauten Pneumatikzylinders 11 nach vorne gedrückt, wie in Fig. 4 dargestellt, wird der Aufnahmebolzen 2 durch die beiden Kegel 9 und 7 in die zentrische Position gebracht und verriegelt.

Über den Aufnahmebolzen 2 wird ebenso das aufgenommene Bauteil 1 in die richtige Position gebracht. Danach folgen weitere Spannschritte für das Bauteil 1.

Mittels eines eingeschraubten Metallstiftes als Metallindikator 14 im Sperrbolzen 8 kann die Positioniervorrichtung über die beiden oben am Grundkörper 6 angebrachten induktiven Näherungsschalter, Sensoren 15, die Position des Metallindikators 14 und somit des Sperrbolzens 8 und des Aufnahmebolzens 2 sensieren um einem Anlagensteuerungsprozess eine Rückmeldung über die Position des Aufnahmebolzens 2 geben zu können (sogenannte INI-Abfrage). Die Sensoren 15 sind mittels einer Abdeckung 16 als Schmutzabdeckkappe geschützt und können in verschiedenen Anlagen in die Steuerung der Anlage eingebunden werden.

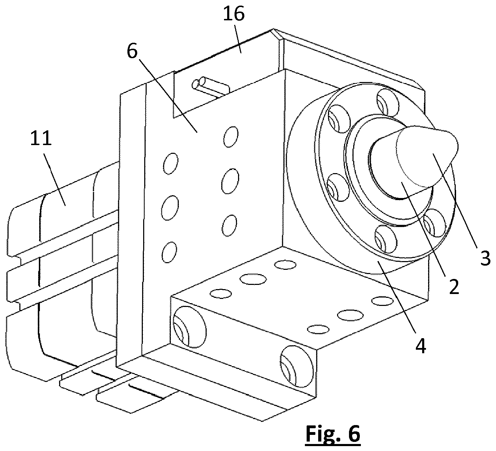

Gegen Verschmutzung der Positioniervorrichtung ist vorne am Aufnahmebolzen 2 eine Schmutzabdeckkappe 13 mit Dichtring 12 aufgepresst. Die Schmutzabdeckkappe 13 bewegt sich daher mit dem Aufnahmebolzen 2 und deckt das zwischen Aufnahmebolzen 2 und Haltering 4 vorhandene "Spiel" ab - als Schutz vor Verschmutzung. Daher ist auch in Fig. 6 kein "Spiel" ersichtlich. Die Schmutzabdeckkappe 13 bewegt sich also mit dem Aufnahmebolzen 2 relativ zum Haltering 4 - beispielsweise gleitet die Schmutzabdeckkappe 13 an der (vorderen) Oberfläche des Halteringes 4 oder es ist dazwischen eine Dichtung oder ein Gleitring angeordnet. Wie oben erwähnt, ist die abgestufte Bohrung des vorderen Halteringes 4 im Durchmesser zum Aufnahmebolzen 2 sowie zum angesetzten Bund 5 des Aufnahmebolzens 2 je nach Bedarf im Durchmesser größer. Bei einer Ausführung mit Schmutzabdeckkappe 13 wie in Fig. 2 dargestellt, kann dies folgendermaßen ausgebildet sein: Da die Schmutzabdeckkappe 13 hier auf den Aufnahmebolzen 2 aufgepresst ist und aus Stabilitätsgründen in den Innendurchmesser des vorderen Halteringes 4 ragt, muss die Bohrung hier um die Wandstärke des den Aufnahmebolzen 2 umschließenden "Schaftes" der Schmutzabdeckkappe 13 größer gebohrt werden, damit das "Spiel" auch im Bereich des vorderen Halteringes 4 für das Bauteil 2, 5 gegeben ist. Dass der Schaft der Schmutzabdeckkappe 13 in den Innendurchmesser des Halteringes 4 ragt, ist nur ein Ausführungsbeispiel. Eine Schmutzabdeckkappe könnte auch nur im Bereich vor dem Haltering 4 auf den Aufnahmebolzen 2 aufgebracht bzw. befestigt, insbesondere aufgepresst sein.

Seitlich, sowie unten, sind am Grundkörper 6 Gewindebohrungen und Passbohrungen zur Befestigung in einer Vorrichtung, beispielsweise an einem Greifer 17 bzw. Greiferrahmen, eingebracht (siehe Fig. 3).

Eine erfindungsgemäße Positioniervorrichtung kann beispielsweise an sogenannten Framer-Gates für Seitenrahmen mit Aufnahmelöchern im Karosseriebau eingesetzt werden, oder an robotergeführten Greiferrahmen für Bauteile mit Aufnahmelöchern im Karosseriebau und für verschiedenste dünnwandige Bauteile mit Aufnahmelöchern die nicht beschädigt werden sollen, und deren Aufnahmelöcher insbesondere mit Dichtstopfen versehen werden.

### Bezugszeichenliste

- 1: Karosseriebauteil
- 2: Aufnahmebolzen
- 3: konisches Ende
- 4: Haltering
- 5: zylindrischer Bund
- 6: Grundkörper
- 7: Innenkegel
- 8: Sperrbolzen
- 9: konisches Ende
- 10: Lagerbuchse
- 11: Pneumatikzylinder
- 12: Dichtring
- 13: Abdeckkappe
- 14: Metallindikator
- 15: Sensor
- 16: Abdeckung
- 17: Greifer
- 18: Spiel

## Patentansprüche

1. Positioniervorrichtung, zum Positionieren eines Karosseriebauteils (1) mit mindestens einer Aufnahmebohrung im Fahrzeugbau, umfassend einen Aufnahmebolzen (2) mit einem konischen Ende (3), der dazu ausgebildet ist, axial durch die Aufnahmebohrung des Karosseriebauteils (1) geführt zu werden um das Karosseriebauteil (1) zu zentrieren und zu positionieren,
**dadurch gekennzeichnet, dass** der Aufnahmebolzen (2) radial schwimmend gelagert ist, wobei der Aufnahmebolzen (2) an seinem dem konischen Ende (3) gegenüberliegenden Ende eine axiale Ausnehmung in Form eines Innenkegels (7) aufweist, wobei die Positioniervorrichtung einen Sperrbolzen (8) umfasst, wobei der Sperrbolzen (8) ein konisches Ende (9) aufweist, wobei der Sperrbolzen (8) axial gegenüber dem Aufnahmebolzen (2) verschieblich ist, wobei die Durchmesser des Innenkegels (7) des Aufnahmebolzens (2) und des konischen Endes (9) des Sperrbolzens (8) zueinander passen, so dass das konische Ende (9) durch Passung in den Innenkegel (7) aufgenommen werden kann.

2. Positioniervorrichtung nach Anspruch 1,
**dadurch gekennzeichnet, dass** der Aufnahmebolzen (2) einen zylindrischen Bolzenabschnitt aufweist und in einem Haltering (4) radial schwimmend gelagert ist, wobei der Haltering (4) einen größeren Innendurchmesser aufweist als der Außendurchmesser des zylindrischen Bolzenabschnitts.

3. Positioniervorrichtung nach Anspruch 2,
**dadurch gekennzeichnet , dass** der Aufnahmebolzen (2) zweistufig ausgebildet ist und zusätzlich zum zylindrischen Bolzenabschnitt einen zylindrischen Bund (5) aufweist, wobei der zylindrische Bund (5) einen größeren Durchmesser aufweist als der zylindrische Bolzenabschnitt, wobei der Haltering (4) zweistufig ausgebildet ist und der Aufnahmebolzen (2) zweistufig radial schwimmend im Haltering (4) radial gelagert ist, wobei eine erste Stufe des Halterings (4) einen größeren Innendurchmesser aufweist als der Außendurchmesser des zylindrischen Bolzenabschnitts und eine zweite Stufe des Halterings (4) einen größeren Innendurchmesser aufweist als der Außendurchmesser des zylindrischen Bundes (5).

4. Positioniervorrichtung nach einem der Ansprüche 2 oder 3,
**dadurch gekennzeichnet , dass** die Positioniervorrichtung einen Grundkörper (6) umfasst, wobei der Haltering (4) am Grundkörper (6) befestigt ist oder einstückig mit dem Grundkörper (6) ausgebildet ist, wobei der Aufnahmebolzen (2) axial durch den Grundkörper (6) und/oder durch den Haltering (4) festgelegt ist.

5. Positioniervorrichtung nach Anspruch 1 und 4,
**dadurch gekennzeichnet , dass** der Sperrbolzen (8) durch eine Bohrung des Grundkörpers (6) geführt ist und der Sperrbolzen (8) axial gegenüber dem Grundkörper (6) verschieblich ist.

6. Positioniervorrichtung nach Anspruch 5,
**dadurch gekennzeichnet , dass** der Sperrbolzen (8) mittels zweier Lagerbuchsen (10) im Grundkörper (6) radial gelagert ist.

7. Positioniervorrichtung nach einem der vorhergehenden Ansprüche, **dadurch gekennzeichnet , dass** der Sperrbolzen (8) mittels eines Pneumatikzylinders (11) axial gegenüber dem Aufnahmebolzen (2) verschoben werden kann.

## Claims

1. Positioning device for positioning a body component (1) with at least one locating bore in vehicle construction, comprising a locating pin (2) with a conical end (3) that is designed to be guided axially through the locating bore in the body component (1) in order to centre and position the body component (1),
**characterized in that** the locating pin (2) is mounted in a radially floating manner, wherein the locating pin (2) has an axial recess in the form of an internal taper (7) at its end opposite the conical end (3), wherein the positioning device comprises a locking pin (8), wherein the locking pin (8) has a conical end (9), wherein the locking pin (8) is axially displaceable with respect to the locating pin (2), wherein the diameters of the internal taper (7) of the locating pin (2) and of the conical end (9) of the locking pin (8) fit together, so that the conical end (9) can be received in the internal taper (7) by fitting.

2. Positioning device according to Claim 1,
**characterized in that** the locating pin (2) has a cylindrical pin portion and is mounted in a radially floating manner in a holding ring (4), wherein the holding ring (4) has a larger inner diameter than the outer diameter of the cylindrical pin portion.

3. Positioning device according to Claim 2,
**characterized in that** the locating pin (2) has a two-stage design and, in addition to the cylindrical pin portion, has a cylindrical collar (5), wherein the cylindrical collar (5) has a greater diameter than the cylindrical pin portion, wherein the holding ring (4) is of two-stage design and the locating pin (2) is radially mounted in the holding ring (4) in a two-stage, radially floating manner, wherein a first stage of the holding ring (4) has a greater inner diameter than the outer diameter of the cylindrical pin portion and a second stage of the holding ring (4) has a greater inner diameter than the outer diameter of the cylindrical collar (5).

4. Positioning device according to one of Claims 2 or 3,
**characterized in that** the positioning device comprises a base body (6), wherein the holding ring (4) is fastened to the base body (6) or is formed integrally with the base body (6), wherein the locating pin (2) is fixed axially through the base body (6) and/or through the holding ring (4).

5. Positioning device according to Claims 1 and 4,
**characterized in that** the locking pin (8) is guided through a bore in the base body (6) and the locking pin (8) is axially displaceable in relation to the base body (6).

6. Positioning device according to Claim 5,
**characterized in that** the locking pin (8) is mounted radially in the base body (6) by means of two bearing bushes (10).

7. Positioning device according to one of the preceding claims,
**characterized in that** the locking pin (8) can be displaced by means of a pneumatic cylinder (11) axially in relation to the locating pin (2).

## Revendications

1. Dispositif de positionnement, pour le positionnement d'un composant de carrosserie (1) avec au moins un alésage de réception dans la construction de véhicules, comprenant un boulon de réception (2) muni d'une extrémité conique (3), qui est configuré pour être guidé axialement à travers l'alésage de réception du composant de carrosserie (1) afin de centrer et de positionner le composant de carrosserie (1),
**caractérisé en ce que** le boulon de réception (2) est monté de manière radialement flottante, le boulon de réception (2) présentant à son extrémité opposée à l'extrémité conique (3) un évidement axial sous la forme d'un cône intérieur (7), le dispositif de positionnement comprenant un boulon de blocage (8), le boulon de blocage (8) présentant une extrémité conique (9), le boulon de blocage (8) pouvant être déplacé axialement par rapport au boulon de réception (2), les diamètres du cône intérieur (7) du boulon de réception (2) et de l'extrémité conique (9) du boulon de blocage (8) étant ajustés l'un à l'autre, de telle sorte que l'extrémité conique (9) peut être reçue par ajustement dans le cône intérieur (7).

2. Dispositif de positionnement selon la revendication 1, **caractérisé en ce que** le boulon de réception (2) présente une section de boulon cylindrique et est monté de manière radialement flottante dans une bague de retenue (4), la bague de retenue (4) présentant un diamètre intérieur plus grand que le diamètre extérieur de la section de boulon cylindrique.

3. Dispositif de positionnement selon la revendication 2, **caractérisé en ce que** le boulon de réception (2) est formé à deux étages et présente, en plus de la section de boulon cylindrique, un collet cylindrique (5), le collet cylindrique (5) présentant un diamètre plus grand que la section de boulon cylindrique, la bague de retenue (4) étant formée à deux étages et le boulon de réception (2) étant monté radialement de manière radialement flottante à deux étages dans la bague de retenue (4), un premier étage de la bague de retenue (4) présentant un diamètre intérieur plus grand que le diamètre extérieur de la section de boulon cylindrique et un deuxième étage de la bague de retenue (4) présentant un diamètre intérieur plus grand que le diamètre extérieur du collet cylindrique (5).

4. Dispositif de positionnement selon l'une quelconque des revendications 2 ou 3, **caractérisé en ce que** le dispositif de positionnement comprend un corps de base (6), la bague de retenue (4) étant fixée au corps de base (6) ou étant configurée d'un seul tenant avec le corps de base (6), le boulon de réception (2) étant fixé axialement par le corps de base (6) et/ou par la bague de retenue (4).

5. Dispositif de positionnement selon les revendications 1 et 4, **caractérisé en ce que** le boulon de blocage (8) est guidé à travers un alésage du corps de base (6) et le boulon de blocage (8) peut être déplacé axialement par rapport au corps de base (6).

6. Dispositif de positionnement selon la revendication 5, en ce que le boulon de blocage (8) est monté radialement dans le corps de base (6) au moyen de deux coussinets (10).

7. Dispositif de positionnement selon l'une quelconque des revendications précédentes, **caractérisé en ce que** le boulon de blocage (8) peut être déplacé axialement par rapport au boulon de réception (2) au moyen d'un vérin pneumatique (11).
